# EUROPEAN PATENT SPECIFICATION

(11) **EP 2 631 171 B1**
(45) Date of publication and mention of the grant of the patent: **04.09.2019**
(21) Application number: 13156715.8
(22) Date of filing: 26.02.2013
(51) Int. Cl.: B64C 13/40, B64C 13/42

(54) **Aircraft actuator hydraulic system**
Hydraulisches Aktuatorsystem für Flugzeug
Système hydraulique de commande d'avion

(30) Priority: 27.02.2012 JP 2012039881
(43) Date of publication of application: 28.08.2013
(73) Proprietor: Nabtesco Corporation, Tokyo 102-0093 (JP)
(72) Inventor: Fukui, Atsushi, Gifu, 503-2192 (JP)
(74) Representative: Isarpatent

(56) References cited:
- EP-A2- 0 831 027
- JP-A- H01 229 103
- US-A1- 2007 018 040
- US-A1- 2009 308 983
- US-A1- 2011 108 671
- US-A1- 2011 278 392

## Description

### BACKGROUND OF THE INVENTION

### Field of the Invention

The present invention relates to an aircraft actuator hydraulic system that has a hydraulically operated actuator for driving a control surface of an aircraft, and supplies pressure oil to this actuator.

### Description of Related Art

An aircraft is provided with control surfaces that are formed as moving surfaces (flight control surfaces) and configured as ailerons, elevators, rudders, and the like. As actuators for driving those moving surfaces, hydraulically operated actuators are often used. As disclosed in US Patent No. 7600715, in an aircraft, two hydraulically operated actuators are attached to one control surface, which is driven by those two actuators, for example.

To the aforementioned actuators, pressure oil is supplied from an aircraft central hydraulic power source, which is a hydraulic power source installed in an airframe of the aircraft. As disclosed in US Patent No. 7600715, the pressure oil is supplied to two actuators that drive one control surface separately from aircraft central hydraulic power sources in different systems installed in the airframe.

Further, US Patent No. 7600715 discloses a hydraulic system (LBHA 104) capable of supplying the pressure oil to one of the two actuators in the case of occurrence of a loss or degradation of the function of the aircraft central hydraulic power sources. This hydraulic system is constituted by a local pump unit (LPU71) that is provided independently from the aircraft central hydraulic power sources and has a pump, and the one of the actuators. The local pump unit in this hydraulic system is provided to be able to raise the pressure of the pressure oil discharged from one of two actuators that drive one control surface provided as an aileron or an elevator, and to supply the pressure oil to the one of the actuators. Further, the local pump unit is configured to operate when the pressure falls in the aircraft central hydraulic power sources and the function thereof is lost or degraded.

JP10-30857A discloses a cooling device that cools an electronic device mounted in an aircraft. This cooling device is configured as a mechanism for guiding the air outside an airframe to an electronic device, cooling the device, and then discharging the air to the outside. Therefore, with this cooling device, an increase in the size thereof can be suppressed.
Document US 2009/0308983 A1 describes a control surface drive system having a hydraulic source which operates actuators and flaps and a power system with a hydraulic line defines a backup circuit.
Document EP 0 831 027 A2 describes a surface actuation system wherein a plurality of actuators are connected to synchronize their operation.
Document US 2011/0278392 A1 describes a an hydraulic apparatus for aircraft actuators having a backup pump and actuators which operate one control surface, wherein each actuator is connected to an own control valve.

### SUMMARY OF THE INVENTION

In an aircraft, even if a loss or degradation of the function of the aircraft central hydraulic power sources has occurred, one of a plurality of actuators provided so as to correspond to one control surface can be driven to drive the control surface by operating the hydraulic system including such a local pump unit as one disclosed in US Patent No. 7600715. Meanwhile, at the time of a loss or degradation of the function of the aircraft central hydraulic power sources, the above-mentioned hydraulic system is continuously run, and the temperature of the hydraulic system increases accordingly.

Moreover, in the aforementioned hydraulic system disclosed in US Patent No. 7600715, each control surface is driven by driving one of the plurality of actuators provided so as to correspond to one control surface. Therefore, a pump configured to produce a high pressure is necessary. Consequently, a problem arises in that the work load of the pump and an electric motor for driving the pump required by internal oil leakage in the aforementioned hydraulic system increases, and also in that the temperature is likely to increase. Accordingly, a cooling device having a cooling capability appropriate for the amount of heat generated by the entire hydraulic system mentioned above is necessary for suppressing the temperature increase in the hydraulic system. Here, a larger amount of heat generated in the hydraulic system will result in an increase in the size of the cooling device for cooling the hydraulic system.

As mentioned above, JP10-30857A discloses a cooling device for cooling an electronic device mounted in an aircraft. This cooling device is configured as a mechanism for guiding the air outside an airframe to a device to be cooled and then discharging the air to the outside. Therefore, an increase in the size of the cooling device is suppressed, while a drag at the time of flight of the aircraft increases. Consequently, provision of the cooling device disclosed in JP10-30857A as a device for cooling the hydraulic system will decrease airframe efficiency of the aircraft.

In addition, in recent years, wings are desired to be thinned for the purpose of increasing the airframe efficiency to improve fuel efficiency. To install the hydraulic system inside the thinned wing, it is very important to decrease the size of the hydraulic system. Moreover, the weight of the hydraulic system is desired to be reduced by decreasing the size thereof from a viewpoint of improvement in aircraft fuel efficiency as well. Furthermore, it is necessary to suppress efficiency decrease due to internal oil leakage to suppress heat generation in the entire hydraulic system and reduce the size or the number of the cooling devices.

In light of the foregoing situation, it is an object of the present invention to provide an aircraft actuator hydraulic system that includes a plurality of actuators for driving one control surface, and that is able to drive the actuators even at the time of a loss or degradation of the function of an aircraft central hydraulic power source, prevent a decrease in airframe efficiency, suppress heat generation in the entire system, and achieve a reduction in the size of a system configuration.

An aircraft actuator hydraulic system according to a feature of the present invention for achieving the above-stated object comprises all the technical features of claim 1; according to an aspect of the invention, said aircraft actuator hydraulic system is an aircraft actuator hydraulic system that has a plurality of hydraulically operated actuators for driving control surfaces of an aircraft and supplies pressure oil to these actuators, comprising: the plurality of actuators operating as a result of the pressure oil being supplied thereto from one or more aircraft central hydraulic power sources installed in an airframe of the aircraft, and driving one of the control surfaces; and one or more backup hydraulic pumps each of which is installed inside a wing on which the control surface is provided and is able to supply the pressure oil to the actuators if a loss or degradation of a function of the aircraft central hydraulic power sources has occurred, wherein the pressure oil is supplied from the same aircraft central hydraulic power source to the plurality of actuators that drive one of the control surfaces, and one of the backup hydraulic pumps supplies the pressure oil to the plurality of actuators that drive one of the control surfaces.

With this configuration, the aircraft actuator hydraulic system is provided as the hydraulic system including the plurality of actuators to which the pressure oil is supplied from the same aircraft central hydraulic power source and that drive one control surface. In this hydraulic system, even in the case of occurrence of a loss or degradation of the function of the aircraft central hydraulic power source, the pressure oil is supplied to the plurality of actuators from one backup hydraulic pump installed inside a wing, and the actuators can be thus driven.

Furthermore, with the above-described configuration, the plurality of actuators that drive one control surface are simultaneously driven by the pressure oil supplied from the backup hydraulic pump. Therefore, the control surface can be driven with a high output by the plurality of actuators even if the backup hydraulic pump is configured to produce a low pressure, unlike the conventional technique of driving a control surface with a single actuator at the time of a loss or degradation of the function of the aircraft central hydraulic power source. As a result, it is possible to reduce the work load of the backup hydraulic pump and the electric motor for driving the backup hydraulic pump required by internal oil leakage in the hydraulic system.

Here, a description will be given of a relationship between a discharge pressure of the backup hydraulic pump and an energy loss due to internal oil leakage in the hydraulic system, taking, as an example, a mode of the hydraulic system in which one control surface is driven by two actuators having the same output specification. A control surface can be driven with the same output in the conventional mode in which the pressure oil is supplied to one of two actuators by a backup hydraulic pump having a predetermined discharge pressure and in the mode based on the above-described configuration in which the pressure oil is supplied to both the two actuators by a backup hydraulic pump having a discharge pressure that is half the predetermined discharge pressure mentioned above. Here, the amount of internal oil leakage in the hydraulic system is in proportion to the square root of the discharge pressure of the pump and to the number of actuators to operate. The energy loss in the hydraulic system is in proportion to a product of the internal oil leakage amount and the pump discharge pressure. Therefore, compared with the conventional mode, the internal oil leakage amount in the mode based on the above-described configuration is about 1.41 times because the number of actuators to operate is twice while the pump discharge pressure decreases by half. However, compared with the conventional mode, the energy loss in the hydraulic system in the mode based on the above-described configuration is about 0.71 times because the pump discharge pressure is half. In other words, the energy loss is reduced by about 29%.

As a result, with the above-described configuration, efficiency decrease due to internal oil leakage is suppressed, and heat generation in the entire hydraulic system can be suppressed. Furthermore, with the above-described configuration, heat generation in the hydraulic system is suppressed, and it is therefore possible to reduce the size or the number of cooling devices provided inside a wing to cool the hydraulic system. It is thus possible to reduce the size of the entire hydraulic system and install the hydraulic system inside a thinned wing. Furthermore, because it is possible to reduce the size or the number of the cooling devices, it is not necessary to provide a cooling device for guiding the air outside the airframe or the wing to the device to be cooled and then discharging the air to the outside. As a result, a decrease in the airframe efficiency will be prevented as well.

Accordingly, with the above-described configuration, it is possible, in an aircraft actuator hydraulic system that includes a plurality of actuators for driving one control surface, to drive the actuators even at the time of a loss or degradation of the function of an aircraft central hydraulic power source, prevent a decrease in the airframe efficiency, suppress heat generation in the entire system, and achieve a reduction in the size of a system configuration.

Furthermore, the aircraft actuator hydraulic system comprises: as the plurality of actuators, a plurality of first actuators that operate as a result of the pressure oil being supplied thereto from a first aircraft central hydraulic power source, which is one of the aircraft central hydraulic power sources, and drive a first control surface, which is provided as one of the control surfaces, and a plurality of second actuators that operate as a result of the pressure oil being supplied thereto from a second aircraft central hydraulic power source, which is one of the aircraft central hydraulic power sources and is different from the first aircraft central hydraulic power source, and drive a second control surface, which is provided as one of the control surfaces so as to operate as one of a pair with the first control surface; and as the backup hydraulic pumps, a first backup hydraulic pump that is installed inside a wing on which the first control surface is provided and that is able to supply the pressure oil to the first actuators if a loss or degradation of a function of the first aircraft central hydraulic power source has occurred, and a second backup hydraulic pump that is installed inside a wing on which the second control surface is provided, and that is able to supply the pressure oil to the second actuators if a loss or degradation of a function of the second aircraft central hydraulic power source has occurred.

In the case of the hydraulic system disclosed in US Patent No. 7600715, the pressure oil is supplied to the plurality of actuators that drive one control surface separately from the aircraft central hydraulic power sources in different systems installed in the airframe. Therefore, a large number of piping systems are necessary between an area inside a wing in which the plurality of actuators that drive one control surface are provided and the airframe in which the aircraft central hydraulic power sources are installed. In other words, it is necessary to install, inside a wing, the piping systems for sending the pressure oil from the aircraft central hydraulic power sources to the actuators and the piping systems for returning the oil discharged from the actuators to the aircraft central hydraulic power sources, so as to correspond to the respective aircraft central hydraulic power sources. Therefore, the space inside the wing necessary for installing the piping systems will increase. In particular, inside a thinned wing, it is difficult to secure the space for installing the large number of piping systems.

In contrast, with the above-described configuration, the plurality of first actuators for driving the first control surface operate with the pressure oil from the first aircraft central hydraulic power source, and operate with the pressure oil from the first backup hydraulic pump at the time of a loss or degradation of the function of the first aircraft central hydraulic power source. The plurality of second actuators for driving the second control surface operate with the pressure oil from the second aircraft central hydraulic power source, and operate with the pressure oil from the second backup hydraulic pump at the time of a loss or degradation of the function of the second aircraft central hydraulic power source. Therefore, only the piping system corresponding to one aircraft central hydraulic power source is installed between each of the areas inside the wing in which the plurality of actuators for driving one control surface are provided and the airframe in which the aircraft central hydraulic power sources are installed. As a result, the space inside the wing necessary for installing the piping systems can be reduced. Consequently, even inside a thinned wing, it is easy to secure the space for installing the piping systems.

It should be appreciated that the above and other objects, features and advantages of the present invention will become apparent from the following description taken in conjunction with the accompanying drawings.

### BRIEF DESCRIPTION OF THE DRAWINGS

FIG. 1 is a schematic diagram showing part of an aircraft to which an aircraft actuator hydraulic system according to an embodiment of the present invention is applied.
FIG. 2 is a hydraulic circuit diagram schematically showing a hydraulic circuit including the aircraft actuator hydraulic system shown in FIG. 1.
FIG. 3 is a schematic diagram showing part of an aircraft for illustrating a modification concerning a mode of application of the aircraft actuator hydraulic system to an aircraft.

### DETAILED DESCRIPTION OF THE INVENTION

Hereinafter, embodiments of the present invention will be described with reference to the drawings. Note that the embodiments of the present invention can be widely applied to aircraft actuator hydraulic systems that have hydraulically operated actuators for driving control surfaces of aircrafts and supply pressure oil to these actuators.

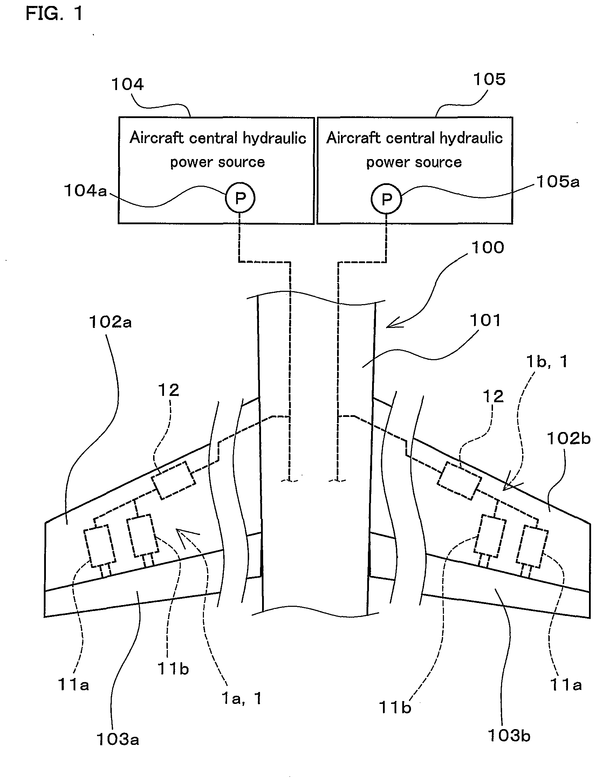

FIG. 1 is a schematic diagram showing part of an aircraft 100 to which an aircraft actuator hydraulic systems (1, 1a, 1b) according to an embodiment of the present invention are applied. FIG. 1 shows part of a body portion of an airframe 101 of the aircraft 100 and a pair of main wings (102a, 102b). Note that in the schematic diagram of FIG. 1, the middle part of the main wings (102a, 102b) is omitted.

The main wing 102a is provided with an aileron 103a as a moving surface (flight control surface) that constitutes a control surface of the aircraft 100. Similarly, the main wing 102b is provided with an aileron 103b as a moving surface (flight control surface) that constitutes a control surface of the aircraft 100. As shown as an example in FIG. 1, the aileron 103a on the main wing 102a is configured to be driven by a plurality of (in the present embodiment, two) actuators (11a, 11b). The aileron 103b on the main wing 102b is also configured to be driven by a plurality of (in the present embodiment, two) actuators (11a, 11b).

Inside the main wing 102a, the actuators (11a, 11b) for driving the aileron 103a and a hydraulic device 12 configured to supply pressure oil to the actuators (11a, 11b) are installed. Similarly, inside the main wing 102b, the actuators (11a, 11b) for driving the aileron 103b and a hydraulic device 12 configured to supply the pressure oil to the actuators (11a, 11b) are installed.

The aircraft actuator hydraulic system 1a (hereinafter also referred to simply as the "hydraulic system 1a") according to one embodiment of the present invention includes the plurality of actuators (11a, 11b) and the hydraulic device 12 that are installed inside the main wing 102a. The hydraulic system 1a is provided so as to correspond to the aileron 103a. In other words, the hydraulic system 1a is provided as a hydraulic system that has the hydraulically operated actuators (11a, 11b) for driving the aileron 103a, which is a control surface, and supplies the pressure oil to these actuators (11a, 11b).

The aircraft actuator hydraulic system 1b (hereinafter also referred to simply as the "hydraulic system 1b") according to another embodiment of the present invention includes the plurality of actuators (11a, 11b) and the hydraulic device 12 that are installed inside the main wing 102b. The hydraulic system 1b is provided so as to correspond to the aileron 103b. In other words, the hydraulic system 1b is provided as a hydraulic system that has the hydraulically operated actuators (11a, 11b) for driving the aileron 103b, which is a control surface, and supplies the pressure oil to these actuators (11a, 11b).

The aircraft actuator hydraulic system 1 (hereinafter also referred to simply as the "hydraulic system 1") according to still another embodiment of the present invention includes the hydraulic system 1a and the hydraulic system 1b. Therefore, the hydraulic system 1 is provided as a hydraulic system that includes, so as to correspond to each of the ailerons (103a, 103b), which are the control surfaces, the hydraulically operated actuators (11a, 11b) that are provided so that a plurality of the actuators drive one aileron 103a and another plurality of the actuators drive another aileron 103b, and supplies the pressure oil to the actuators (11a, 11b) provided so that the plurality of the actuators correspond to each control surface.

In the present embodiment, the hydraulic system 1a and the hydraulic system 1b that are installed in the respective main wings (102a, 102b) are configured in the same manner, and have identically configured actuators (11a, 11b) and hydraulic devices 12. Accordingly, in the following description, the hydraulic system 1a installed in one main wing 102a will be described. The description of the same configuration of the hydraulic system 1b installed in the other main wing 102b as that of the hydraulic system 1a will be omitted.

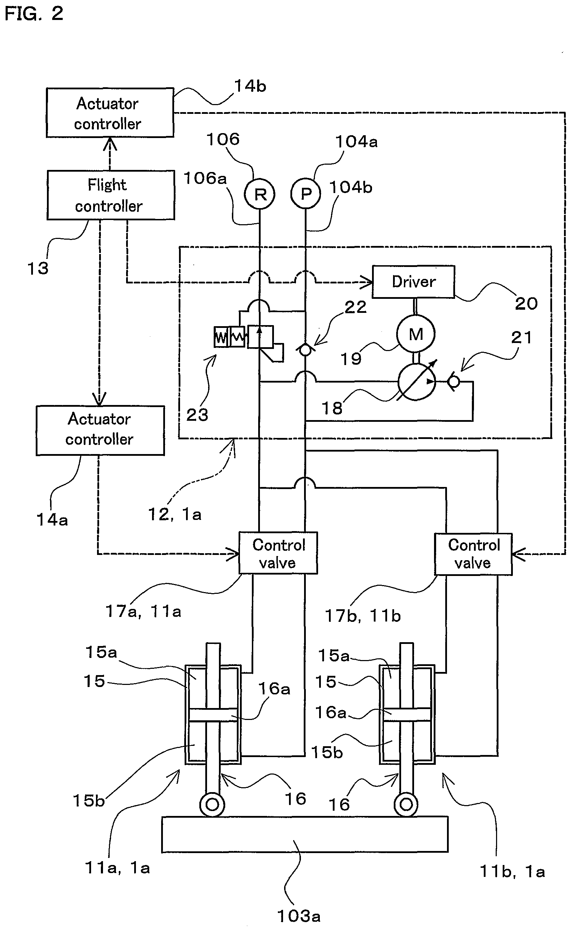

FIG. 2 is a hydraulic circuit diagram schematically showing a hydraulic circuit including the hydraulic system 1a provided so as to correspond to the aileron 103a. As shown in FIG. 2, the actuators (11a, 11b) are coupled to the aileron 103a, and each include a cylinder mechanism capable of driving the aileron 103a. The actuator 11a is provided with a control valve 17a for controlling operation of the cylinder mechanism of the actuator 11a. Similarly, the actuator 11b is provided with a control valve 17b for controlling operation of the cylinder mechanism of the actuators 11b.

Each cylinder mechanism of the actuators (11a, 11b) includes a cylinder 15, a rod 16 provided with a piston 16a, and so on, and the cylinder 15 is internally divided into two oil chambers (15a, 15b) by the piston 16a. In the actuator 11a, each oil chamber (15a, 15b) in the cylinder 15 is configured to be able to be in communication with an aircraft central hydraulic power source 104 and a reservoir circuit 106 that will be described later, via the control valve 17a. In the actuator 11b, each oil chamber (15a, 15b) in the cylinder 15 is configured to be able to be in communication with the aircraft central hydraulic power source 104 and the reservoir circuit 106 via the control valve 17b. Note that the actuators (11a, 11b) in the hydraulic system 1b are configured to be able to be in communication with an aircraft central hydraulic power source 105 and a reservoir circuit (not shown) corresponding to the aircraft central hydraulic power source 105 that will be described later.

The aircraft central hydraulic power source 104 shown in FIG. 1 includes an aircraft central hydraulic pump 104a that supplies the pressure oil, an oil cooling device (not shown) that has a heat exchanger for cooling oil that passes therethrough and cools the pressure oil supplied from the aircraft central hydraulic pump 104a, and so on. The aircraft central hydraulic power source 104 is provided as a hydraulic power source installed on the airframe 101 side (inside the airframe 101).

Similarly to the aircraft central hydraulic power source 104, the aircraft central hydraulic power source 105 shown in FIG. 1 includes an aircraft central hydraulic pump 105a that supplies the pressure oil, an oil cooling device (not shown) that has a heat exchanger for cooling oil that passes therethrough and cools the pressure oil supplied from the aircraft central hydraulic pump 105a, and so on. The aircraft central hydraulic power source 105 is provided as a hydraulic power source installed on the airframe 101 side (inside the airframe 101). Note that the aircraft central hydraulic power sources 104 and 105 are provided as systems independent from each other.

The aircraft central hydraulic power source 104 corresponds to the aileron 103a, which is one of a pair of the ailerons (103a, 103b). The plurality of actuators (11a, 11b) for driving the aileron 103a, which is one control surface, operate as a result of the pressure oil from the aircraft central hydraulic power source 104 being supplied to these actuators. In other words, the aircraft central hydraulic power source 104 is connected to the actuators (11a, 11b) in the hydraulic system 1a corresponding to the aileron 103a so as to be able to supply the pressure oil to the actuators (11a, 11b). Meanwhile, the aircraft central hydraulic power source 104 is not connected to the actuators (11a, 11b) in the hydraulic system 1b corresponding to the aileron 103b.

On the other hand, the aircraft central hydraulic power source 105 corresponds to the aileron 103b, which is the other of the pair of ailerons (103a, 103b). The plurality of actuators (11a, 11b) for driving the aileron 103b, which is one control surface, operate as a result of the pressure oil from the aircraft central hydraulic power source 105 being supplied to these actuators. In other words, the aircraft central hydraulic power source 105 is connected to the actuators (11a, 11b) in the hydraulic system 1b corresponding to the aileron 103b so as to be able to supply the pressure oil to the actuators (11a, 11b). Meanwhile, the aircraft central hydraulic power source 105 is not connected to the actuators (11a, 11b) in the hydraulic system 1a corresponding to the aileron 103a.

As described above, in the present embodiment, the pressure oil from the same aircraft central hydraulic power source 104 is supplied to the actuators (11a, 11b) for driving the aileron 103a that is one control surface. The pressure oil from the same aircraft central hydraulic power source 105 is supplied to the actuators (11a, 11b) for driving the aileron 103b that is one control surface. Note that in the aircraft 100, the aircraft central hydraulic power sources 104 and 105 are configured to supply the pressure oil also to actuators (not shown) for driving moving surfaces other than the ailerons (103a, 103b).

The reservoir circuit 106 shown in FIG. 2 has a tank (not shown) to which oil (hydraulic fluid) returns that has been supplied as the pressure oil and then discharged from the actuators (11a, 11b) corresponding to the aileron 103a, and is configured to be in communication with the aircraft central hydraulic power source 104. In other words, the reservoir circuit 106 is connected to the actuators (11a, 11b) installed in the main wing 102a, and is also connected to the aircraft central hydraulic power source 104. Thus, the pressure of the oil that has returned to the reservoir circuit 106 is raised by the aircraft central hydraulic power source 104, and the oil is then supplied to the actuators (11a, 11b) in the hydraulic system 1a. To the aircraft central hydraulic power source 105 constituted as a system independent from the aircraft central hydraulic power source 104 as well, a reservoir circuit (not shown) is provided that is constituted as a system provided similarly to the reservoir circuit 106 and independent therefrom, so as to be in communication with the aircraft central hydraulic power source 105.

The control valve 17a for the actuator 11a is provided as a valve mechanism for switching the state of connection of a supply path 104b in communication with the aircraft central hydraulic power source 104 and a discharge path 106a in communication with the reservoir circuit 106 to the oil chambers (15a, 15b) in the cylinder 15 of the actuator 11a. The control valve 17a is provided as, for example, an electrohydraulic servo valve (EHSV), and is configured to be able to proportionally switch the position of a spool (not shown). The control valve 17a is driven based on a command signal from an actuator controller 14a for controlling operation of the actuator 11a.

The control valve 17b for the actuator 11b is provided as a valve mechanism for switching the state of connection of the supply path 104b and the discharge path 106a to the oil chambers (15a, 15b) in the cylinder 15 of the actuator 11b. The control valve 17b is configured similarly to the control valve 17a. For example, it is provided as an electrohydraulic servo valve (EHSV), and is configured to be able to proportionally switch the position of a spool (not shown). The control valve 17b is driven based on a command signal from an actuator controller 14b for controlling operation of the actuator 11b.

As a result of the control valve 17a being switched based on the command signal from the actuator controller 14a, the pressure oil is supplied from the supply path 104b to one of the oil chambers (15a, 15b), and the oil is discharged from the other oil chamber (15a, 15b) to the discharge path 106a. The rod 16 is thereby displaced relative to the cylinder 15, and the aileron 103a is driven. Although not shown in the drawings, the actuator 11a is provided with a mode switching valve between the cylinder mechanism thereof and the control valve 17a, for switching the state (mode) of communication between the oil chambers (15a, 15b). Note that the operation of the control valve 17b is the same as that of the above-described control valve 17a except that the control valve 17b operates based on a command signal from the actuator controller 14b, and the description of the control valve 17b will therefore be omitted.

Note that the actuator controller 14a is provided as a controller for controlling operation of the cylinder mechanism of the actuator 11a via the control valve 17a. The actuator controller 14b is provided as a controller for controlling operation of the cylinder mechanism of the actuator 11b via the control valve 17b. The actuator controllers 14a and 14b are each configured to control the actuators (11a, 11b) based on a command signal from a flight controller 13, which is a further superordinate computer that commands operation of the aileron 103a. The flight controller 13 includes, for example, a CPU (Central Processing Unit), a memory, an interface, and so on, which are not shown in the drawings.

Next, the hydraulic device 12 in the hydraulic system 1a will be discussed. The hydraulic device 12 in the hydraulic system 1a is configured to supply the pressure oil to the actuators (11a, 11b) for driving the aileron 103a. The hydraulic device 12 is installed inside the main wing 102a. The hydraulic device 12 includes a backup hydraulic pump 18, an electric motor 19, a driver 20, check valves (21, 22), a relief valve 23, and so on.

The backup hydraulic pump 18 is installed inside the main wing 102a, and is configured as, for example, a variable displacement hydraulic pump having a swash plate. This backup hydraulic pump 18 is connected on its suction side to the discharge path 106a so as to be in communication therewith, and is connected on its discharge side to the supply path 104b via the check valve 21 so as to be in communication with the supply path 104b and is able to supply the pressure oil thereto.

The backup hydraulic pump 18 is provided as a hydraulic pump capable of supplying the pressure oil to the actuators (11a, 11b) if a loss or degradation of the function (pressure oil supply function) of the aircraft central hydraulic power source 104 has occurred. In other words, the backup hydraulic pump 18 is configured to be able to supply the pressure oil to the actuators (11a, 11b) if a loss or degradation of the function of the aircraft central hydraulic power source 104 has occurred due to a failure of, or oil leakage from, the aircraft central hydraulic pump 104a in the aircraft central hydraulic power source 104, or the like.

Further, in the present embodiment, one backup hydraulic pump 18 is configured to supply the pressure oil to the actuators (11a, 11b) for driving the aileron 103a that is one control surface. The specification of the maximum discharge pressure of the backup hydraulic pump 18 is set so as to be able to secure a driving force needed for driving the aileron 103a when the two actuators (11a, 11b) having the same output specification are simultaneously driven by the pressure oil from the backup hydraulic pump 18.

It is assumed that the maximum discharge pressure of a hydraulic pump needed for securing a driving force necessary for driving the aileron 103a with only one of the two actuators (11a, 11b) is 3000 psi (20.7 MPa). In this case, because the two actuators (11a, 11b) having the same output specification are simultaneously driven by the pressure oil from the backup hydraulic pump 18, the maximum discharge pressure of the backup hydraulic pump18 is set to 1500 psi (10.3 MPa) so as to be able to secure the driving force necessary for driving the aileron 103a.

The aforementioned check valve 21 is provided as a check valve for allowing an oil flow in a direction from the backup hydraulic pump 18 toward the actuators (11a, 11b) and preventing an oil flow in the reverse direction. The supply path 104b is provided with the check valve 22 upstream of a point to which the oil path of the backup hydraulic pump 18 on its discharge, that is, the oil path downstream of the check valve 21 is connected (on the aircraft central hydraulic pump 104a side relative to the point to which this oil path is connected). The check valve 22 is provided as a check valve for allowing an oil flow in a direction from the aircraft central hydraulic pump 104a toward the actuators (11a, 11b) and preventing an oil flow in the reverse direction.

The discharge path 106a is provided with a relief valve 23 for discharging the pressure oil to the reservoir circuit 106 if the pressure of the oil discharged from the actuators (11a, 11b) has increased, on the downstream side of a point to which the oil path of the backup hydraulic pump 18 on its suction side is connected (on the reservoir circuit 106 relative to the point to which this oil path is connected). The relief valve 23 is provided with a pilot pressure chamber that is in communication with the supply path 104b and in which a spring is disposed. If the pressure of the pressure oil supplied from the supply path 104b falls below a predetermined pressure value, the pressure (pilot pressure) of the pressure oil supplied as pilot pressure oil from the supply path 104b to the aforementioned pilot pressure chamber also falls below a predetermined pressure value, and the discharge path 106a is blocked by the relief valve 23.

As described above, because the above-described check valves (21, 22) and relief valve 23 are provided in the hydraulic device 12, the pressure of the oil discharged from the actuators (11a, 11b) can be raised by the backup hydraulic pump 18 without returning the oil to the reservoir circuit 106 at the time of a loss or degradation of the function of the aircraft central hydraulic power source 104. The hydraulic device 12 is thus able to supply the pressure oil with the raised pressure to the actuators (11a, 11b).

The electric motor 19 is installed inside the main wing 102a together with the backup hydraulic pump 18. The electric motor 19 is coupled to the backup hydraulic pump 18 via a coupling or the like, and is configured to drive the backup hydraulic pump 18. The operational state of the electric motor 19 is controlled via the driver 20 based on a command signal from the flight controller 13. Note that the driver 20 is configured to control the electric current supplied to the electric motor 19 and the running speed (rotational speed) thereof to drive the electric motor 19, based on a command signal from the flight controller 13.

Note that the flight controller 13 is connected to a pressure sensor (not shown) for detecting the discharge pressure of the aircraft central hydraulic power source 104 or the pressure of the pressure oil that passes through the supply path 104b so that a pressure detection signal detected by this pressure sensor is input to the flight controller 13. The flight controller 13 is configured to detect a loss or degradation of the function of the aircraft central hydraulic power source 104 based on the aforementioned pressure detection signal. The flight controller 13, upon detecting a loss or degradation of the function of the aircraft central hydraulic power source 104, controls the driver 20 to activate the electric motor 19, and causes the backup hydraulic pump 18 to start to run. Thus, the pressure oil is supplied to the actuators (11a, 11b).

Note that the flight controller 13 may be configured to activate the backup hydraulic pump 18 also at the time when the aircraft 100 begins to prepare to take off and when it begins to prepare to land, as well as at the time when a loss or degradation of the function of the aircraft central hydraulic power source 104 occurs. In this case, even if a loss or degradation of the function of the aircraft central hydraulic power source 104 occurs rapidly at the stage of takeoff or landing, safe flight can be ensured because the backup hydraulic pump 18 is already run at that stage.

Next, the operation of the hydraulic system 1a will be discussed. In a state where a loss or degradation of the function of the aircraft central hydraulic power source 104 is not occurring, the backup hydraulic pump 18 is not run. In this state, with respect to the cylinder mechanism of each actuator (11a, 11b), the pressure oil from the aircraft central hydraulic power source 104 is supplied to one of the oil chambers (15a, 15b) via the corresponding control valve (17a, 17b), and the oil is discharged from the other oil chamber (15a, 15b) and caused to return to the reservoir circuit 106 via the control valve (17a, 17b). The connection state of each control valve (17a, 17b) is switched based on the command signal from the corresponding actuator controller (14a, 14b), and the oil chambers (15a, 15b) to/from which the pressure oil is supplied and discharged are switched thereby. As a result of the pressure oil being supplied and discharged to/from the oil chambers (15a, 15b) in each actuator (11a, 11b), the rod 16 is displaced relative to the cylinder 15, the actuators (11a, 11b) operate, and the aileron 103a is driven.

On the other hand, if a loss or degradation of the function of the aircraft central hydraulic power source 104 has occurred, the driver 20 is controlled to cause the electric motor 19 to start to run, based on the command signal from the flight controller 13, and the backup hydraulic pump 18 is started to run. With respect to the cylinder mechanism of each actuator (11a, 11b), the pressure oil from the backup hydraulic pump 18 is supplied to one of the oil chambers (15a, 15b) via the corresponding control valve (17a, 17b), the pressure oil is discharged from the other oil chamber (15a, 15b) and sucked by the backup hydraulic pump 18 via the control valve (17a, 17b), and the pressure of the pressure oil is raised. The connection state of each control valve (17a, 17b) is switched based on the command signal from the corresponding actuator controller (14a, 14b), and the oil chambers (15a, 15b) to/from which the pressure oil is supplied and discharged are switched thereby. Thus, the actuators (11a, 11b) operate and the aileron 103a is driven.

As described above, according to the present embodiment, the aircraft actuator hydraulic system 1a is provided as the hydraulic system including the actuators (11a, 11b) to which the pressure oil is supplied from the same aircraft central hydraulic power source 104 and that drive the aileron 103a, which is one control surface. Further, in the hydraulic system 1a, even if a loss or degradation of the function of the aircraft central hydraulic power source 104 has occurred, the pressure oil is supplied to the actuators (11a, 11b) from one backup hydraulic pump 18 installed inside the main wing 102a, and thus the actuators (11a, 11b) can be driven.

Further, with the hydraulic system 1a, the actuators (11a, 11b) for driving one aileron 103a are simultaneously driven by the pressure oil supplied from the backup hydraulic pump 18. Therefore, the aileron 103a can be driven with a high output by the actuators (11a, 11b) even if the backup hydraulic pump 18 is configured to produce a low pressure, unlike the conventional technique of driving a control surface with a single actuator at the time of a loss or degradation of the function of the aircraft central hydraulic power source. As a result, it is possible to reduce the work load of the backup hydraulic pump 18 and the electric motor 19 for driving the backup hydraulic pump 18 required by internal oil leakage in the hydraulic system 1a.

Here, a description will be given of a relationship between a discharge pressure of the backup hydraulic pump and an energy loss due to internal oil leakage in the hydraulic system, taking, as an example, a mode of the hydraulic system in which one aileron 103a is driven by the two actuators (11a, 11b) having the same output specification. The aileron 103a can be driven with the same output in the conventional mode in which the pressure oil is supplied to one of the two actuators (11a, 11b) by a backup hydraulic pump having a predetermined discharge pressure and in the mode based on the configuration of the present embodiment in which the pressure oil is supplied to both the two actuators (11a, 11b) by the backup hydraulic pump 18 having a discharge pressure that is half the aforementioned predetermined discharge pressure. Here, the amount of internal oil leakage in the hydraulic system is in proportion to the square root of the discharge pressure of the pump and the number of the actuators (11a, 11b) to operate. The energy loss in the hydraulic system is in proportion to a product of the internal oil leakage amount and the pump discharge pressure. Therefore, compared with the conventional mode, the internal oil leakage amount in the mode based on the configuration of the present embodiment is about 1.41 times because the number of the actuators (11a, 11b) to operate is twice while the discharge pressure of the backup hydraulic pump 18 decreases by half. However, compared with the conventional mode, the energy loss in the hydraulic system in the mode based on the configuration of the present embodiment is about 0.71 times because the discharge pressure of the backup hydraulic pump 18 is half. In other words, the energy loss is reduced by about 29%.

As a result, with the configuration of the present embodiment, efficiency decrease due to internal oil leakage is suppressed, and heat generation in the entire hydraulic system 1a can be suppressed. Furthermore, with the configuration of the present embodiment, heat generation in the hydraulic system 1a is suppressed, and it is therefore possible to reduce the size or the number of cooling devices provided inside the main wing 102a to cool the hydraulic system 1a. It is thus possible to reduce the size of the entire hydraulic system 1a and install the hydraulic system 1a inside the thinned main wing 102a. Furthermore, because it is possible to reduce the size or the number of the cooling devices, it is not necessary to provide a cooling device for guiding the air outside the main wing 102a to the device to be cooled and then discharging the air to the outside. As a result, a decrease in the airframe efficiency will be prevented as well.

Accordingly, with the configuration of the present embodiment, it is possible, in the aircraft actuator hydraulic system 1a that includes the actuators (11a, 11b) for driving one aileron 103a, to drive the actuators (11a, 11b) even at the time of a loss or degradation of the function of the aircraft central hydraulic power source 104, prevent a decrease in the airframe efficiency, suppress heat generation in the entire system, and reduce the size of the system configuration.

Note that in the present embodiment, the hydraulic system 1b can achieve the same advantageous effect as that achieved by the hydraulic system 1a. In other words, with the configuration of the present embodiment, it is possible, in the aircraft actuator hydraulic system 1b that includes the actuators (11a, 11b) for driving one aileron 103b, to drive the actuators (11a, 11b) even at the time of a loss or degradation of the function of the aircraft central hydraulic power source 105, prevent a decrease in the airframe efficiency, suppress heat generation in the entire system, and reduce the size of the system configuration.

Next, the hydraulic system 1 will be discussed. As shown in FIG. 1, the hydraulic system 1 includes the hydraulic system 1a and the hydraulic system 1b. In other words, the hydraulic system 1 includes the plurality of actuators (11a, 11b) in the hydraulic system 1a, the plurality of actuators (11a, 11b) in the hydraulic system 1b, the hydraulic device 12 in the hydraulic system 1a, and the hydraulic device 12 in the hydraulic system 1b.

The plurality of actuators (11a, 11b) in the hydraulic system 1a are provided as the plurality of actuators (11a, 11b) for driving one aileron 103a, as described above. The plurality of actuators (11a, 11b) in the hydraulic system 1a constitute a plurality of first actuators (11a, 11b) in the present embodiment. The first actuators (11a, 11b) operate as a result of the pressure oil being supplied thereto from the aircraft central hydraulic power source 104 that constitutes a first aircraft central hydraulic power source 104 in the present embodiment, and drive one aileron 103a, which constitutes a first control surface in the present embodiment.

The plurality of actuators (11a, 11b) in the hydraulic system 1b are provided as the plurality of actuators (11a, 11b) for driving one aileron 103b, as described above. The plurality of actuators (11a, 11b) in the hydraulic system 1b constitute a plurality of second actuators (11a, 11b) in the present embodiment. The second actuators (11a, 11b) operate as a result of the pressure oil being supplied thereto from the aircraft central hydraulic power source 105, which constitutes a second aircraft central hydraulic power source 105 in the present embodiment that is different from the first aircraft central hydraulic power source 104, and drive one aileron 103b, which constitutes a second control surface in the present embodiment that is provided so as to operate as one of a pair with the aileron 103a, which is the first control surface.

The backup hydraulic pump 18 in the hydraulic device 12 in the hydraulic system 1a constitutes a first backup hydraulic pump 18 in the present embodiment. The first backup hydraulic pump 18 is installed inside the main wing 102a on which the aileron 103a that is the first control surface is provided, and is provided so as to be able to supply the pressure oil to the first actuators (11a, 11b) if a loss or degradation of the function of the first aircraft central hydraulic power source 104 has occurred.

The hydraulic device 12 in the hydraulic system 1b is also provided with the backup hydraulic pump 18, which is the same as that in the hydraulic system 1a. The backup hydraulic pump 18 in the hydraulic device 12 in the hydraulic system 1b constitutes a second backup hydraulic pump 18 in the present embodiment. The second backup hydraulic pump 18 is installed inside the main wing 102b on which the aileron 103b that is the second control surface is provided, and is provided so as to be able to supply the pressure oil to the second actuators (11a, 11b) if a loss or degradation of the function of the second aircraft central hydraulic power source 105 has occurred.

The above-described hydraulic system 1 can also achieve the same advantageous effect as that achieved by the hydraulic system 1a and the hydraulic system 1b. In other words, with the configuration of the present embodiment, it is possible, in the aircraft actuator hydraulic system 1 that includes the actuators (11a, 11b) for driving one aileron 103a and the actuators (11a, 11b) for driving one aileron 103b, to drive the actuators (11a, 11b) even at the time of a loss or degradation of the function of the aircraft central hydraulic power sources (104, 105), prevent a decrease in the airframe efficiency, suppress heat generation in the entire system, and reduce the size of the system configuration.

Furthermore, with the hydraulic system 1, the first actuators (11a, 11b) for driving the aileron 103a, which is the first control surface, are operated by the pressure oil from the first aircraft central hydraulic power source 104, and are operated by the pressure oil from the first backup hydraulic pump 18 at the time of a loss or degradation of the function of the first aircraft central hydraulic power source 104. Meanwhile, the second actuators (11a, 11b) for driving the aileron 103b, which is the second control surface, are operated by the pressure oil from the second aircraft central hydraulic power source 105, and are operated by the pressure oil from the second backup hydraulic pump 18 at the time of a loss or degradation of the function of the second aircraft central hydraulic power source 105. Therefore, only the piping system corresponding to one aircraft central hydraulic power source 104 or 105 is installed between an area inside the main wing 102a or the main wing 102b in which the actuators (11a, 11b) for driving the aileron 103a or 103b, which is one control surface, are provided and the airframe 101 in which the aircraft central hydraulic power sources (104, 105) are installed. As a result, the space inside the main wings (102a, 102b) necessary for installing the piping systems can be reduced. Consequently, even inside the thinned main wings (102a, 102b), it is easy to secure the space for installing the piping systems.

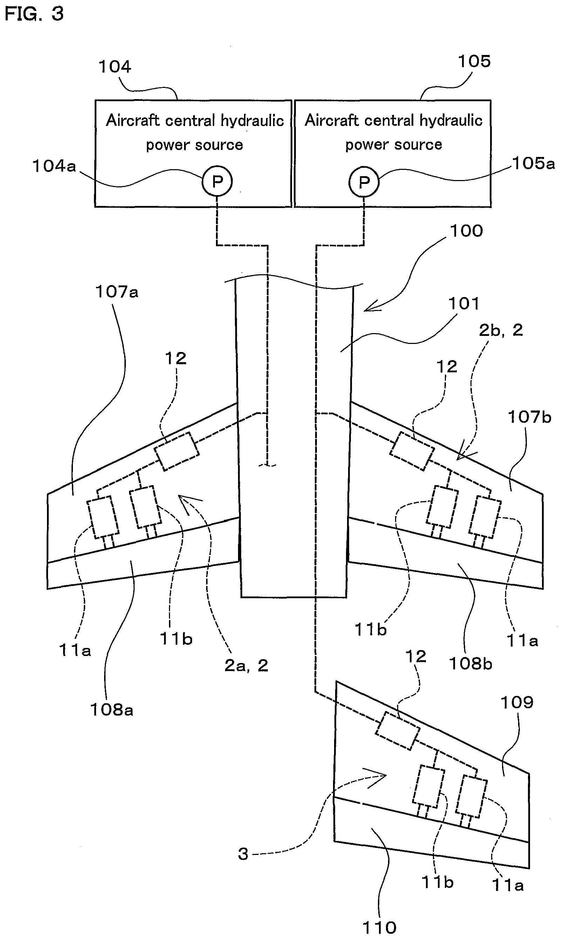

Although the embodiments of the present invention have been described thus far, the present invention is not limited to the embodiments described above, and various modifications may be made within the scope recited in the claims. For example, the following modifications may be implemented.
(1) An aircraft actuator hydraulic system may also be implemented that has an actuator for driving a control surface other than an aileron, such as an elevator, a rudder, or a flapperon, and supplies the pressure oil to this actuator. For example, a modification shown in FIG. 3 may be implemented. FIG. 3 is a schematic diagram showing part of the aircraft 100 for illustrating a modification concerning a mode of application of the aircraft actuator hydraulic systems to the aircraft 100.

FIG. 3 shows the rear part of the airframe 101, a pair of tailplanes (107a, 107b), and a vertical tail 109 of the aircraft 100. Note that the vertical tail 109 is schematically shown in a state of being separate from the airframe 101. As shown in FIG. 3, aircraft actuator hydraulic systems (2, 2a, 2b, 3) according to the modification are installed in the tailplanes (107a, 107b) and the vertical tail 109. Note that in the description of the aircraft actuator hydraulic systems (2, 2a, 2b, 3) according to the modification, the point that is different from the above-described embodiments will be described. The description of the components configured in the same manner as those in the above-described embodiments will be omitted by providing the same reference numerals thereto in the drawing, or citing the same reference numerals or names.

The aircraft actuator hydraulic system 2a (hereinafter also referred to simply as the "hydraulic system 2a") includes a plurality of actuators (11a, 11b) and a hydraulic device 12, as with the hydraulic system 1a according to the above-described embodiment. However, the hydraulic system 2a is different from the hydraulic system 1a on the point that the actuators (11a, 11b) are configured as actuators for driving an elevator 108a, which is one control surface provided on the tailplane 107a.

The actuators (11a, 11b) and the hydraulic device 12 in the hydraulic system 2a are installed inside the tailplane 107a. The pressure oil is supplied to the actuators (11a, 11b) in the hydraulic system 2a from one aircraft central hydraulic power source 104. Further, one backup hydraulic pump 18 provided in the hydraulic device 12 in the hydraulic system 2a supplies the pressure oil to the actuators (11a, 11b) for driving one elevator 108a.

The aircraft actuator hydraulic system 2b (hereinafter also referred to simply as the "hydraulic system 2b") includes a plurality of actuators (11a, 11b) and a hydraulic device 12, as with the hydraulic system 1b according to the above-described embodiment. However, the hydraulic system 2b is different from the hydraulic system 1b on the point that the actuators (11a, 11b) are configured as actuators for driving an elevator 108b, which is one control surface provided on the tailplane 107b.

The actuators (11a, 11b) and the hydraulic device 12 in the hydraulic system 2b are installed inside the tailplane 107b. The pressure oil is supplied to the actuators (11a, 11b) in the hydraulic system 2b from one aircraft central hydraulic power source 105. Further, one backup hydraulic pump 18 provided in the hydraulic device 12 in the hydraulic system 2b supplies the pressure oil to the actuators (11a, 11b) for driving one elevator 108b.

The aircraft actuator hydraulic system 2 (hereinafter also referred to simply as the "hydraulic system 2") includes the hydraulic system 2a and the hydraulic system 2b. In other words, the hydraulic system 2 includes the plurality of actuators (11a, 11b) in the hydraulic system 2a, the plurality of actuators (11a, 11b) in the hydraulic system 2b, the hydraulic device 12 in the hydraulic system 2a, and the hydraulic device 12 in the hydraulic system 2b.

In the hydraulic system 2, the actuators (11a, 11b) in the hydraulic system 2a constitute a plurality of first actuators (11a, 11b). The first actuators (11a, 11b) operate as a result of the pressure oil being supplied thereto from the aircraft central hydraulic power source 104, which constitutes a first aircraft central hydraulic power source 104, and drive one elevator 108a, which constitutes a first control surface. Further, in the hydraulic system 2, the actuators (11a, 11b) in the hydraulic system 2b constitute a plurality of second actuators (11a, 11b). The second actuators (11a, 11b) operate as a result of the pressure oil being supplied thereto from the aircraft central hydraulic power source 105, which constitutes a second aircraft central hydraulic power source 105 that is different from the first aircraft central hydraulic power source 104, and drive one elevator 108b, which constitutes a second control surface provided so as to operate as one of a pair with the elevator 108a, which is the first control surface.

In the hydraulic system 2, the backup hydraulic pump 18 in the hydraulic device 12 in the hydraulic system 2a constitutes a first backup hydraulic pump 18. The first backup hydraulic pump 18 is installed inside the tailplane 107a on which the elevator 108a that is the first control surface is provided, and is provided so as to be able to supply the pressure oil to the first actuators (11a, 11b) if a loss or degradation of the function of the first aircraft central hydraulic power source 104 has occurred. Further, in the hydraulic system 2, the backup hydraulic pump 18 in the hydraulic device 12 in the hydraulic system 2b constitutes a second backup hydraulic pump 18. The second backup hydraulic pump 18 is installed inside the tailplane 107b on which the elevator 108b that is the second control surface is provided, and is provided so as to be able to supply the pressure oil to the second actuators (11a, 11b) if a loss or degradation of the function of the second aircraft central hydraulic power source 105 has occurred.

An aircraft actuator hydraulic system 3 (hereinafter also referred to simply as the "hydraulic system 3") includes a plurality of actuators (11a, 11b) and a hydraulic device 12, as with the hydraulic system 1b according to the above-described embodiment. However, the hydraulic system 3 is different from the hydraulic system 1b on the point that the plurality of actuators (11a, 11b) are configured as actuators for driving a rudder 110, which is one control surface provided on the vertical tail 109.

The actuators (11a, 11b) and the hydraulic device 12 in the hydraulic system 3 are installed inside the vertical tail 109. The pressure oil is supplied to the actuators (11a, 11b) in the hydraulic system 3 from one aircraft central hydraulic power source 105. Further, one backup hydraulic pump 18 provided in the hydraulic device 12 in the hydraulic system 3 supplies the pressure oil to the actuators (11a, 11b) for driving one rudder 110.

As in the above-described modification, an aircraft actuator hydraulic system may also be implemented that has an actuator for driving a control surface other than an aileron, such as an elevator or a rudder, and supplies the pressure oil to this actuator.
(2) Although the above embodiments have been described, taking an example in which two actuators drive one control surface, this need not be the case. An aircraft actuator hydraulic system provided with three or more actuators for driving one control surface may also be implemented.
(3) The mode of the hydraulic circuit connecting the aircraft actuator hydraulic system to the aircraft central hydraulic power source is not limited to the exemplary mode described in the above embodiment, and may be modified in various manners for implementation. The mode of the hydraulic circuit connecting the backup hydraulic pump to the plurality of actuators is not limited to the exemplary mode described in the above embodiment either, and may by modified in various manners for implementation.

The present invention can be widely applied to aircraft actuator hydraulic systems that have hydraulically operated actuators for driving control surfaces of aircrafts, and supply pressure oil to these actuators. The present invention is defined by the appended claim.

## Claims

1. An aircraft actuator hydraulic system (1, 1a, 1b, 2, 2a, 2b, 3) that has a plurality of hydraulically operated actuators (11a, 11b) for driving one or more control surfaces (103a, 103b, 108a, 108b, 110) of an aircraft (100) and supplies pressure oil to these actuators (11a, 11b), comprising:
the plurality of actuators (11a, 11b) configured to operate as a result of the pressure oil being supplied thereto from one or more aircraft central hydraulic power sources (104, 105) installed in an airframe (101) of the aircraft (100), and configured to drive one of the control surfaces (103a, 103b, 108a, 108b, 110);
a plurality of control valves (17a, 17b) each of which corresponds to the respective actuator; and one or more backup hydraulic pumps (18) each of which is configured to be installed inside a wing (102a, 102b, 107a, 107b, 109) on which the control surface (103a, 103b, 108a, 108b, 110) is provided and is able to supply the pressure oil to the actuators (11a, 11b) if a loss or degradation of a function of the one or more aircraft central hydraulic power sources (104, 105) has occurred,
wherein the pressure oil is configured to be supplied from the same aircraft central hydraulic power source (104, 105) to the plurality of actuators (11a, 11b) that drive one of the control surfaces (103a, 103b, 108a, 108b, 110), and
one of the backup hydraulic pumps (18) supplies the pressure oil to the plurality of actuators (11a, 11b) that are configured to drive one of the control surfaces (103a, 103b, 108a, 108b, 110), further comprising:
as the plurality of actuators (11a, 11b), a plurality of first actuators (11a, 11b) that are configured to operate as a result of the pressure oil being supplied thereto from a first aircraft central hydraulic power source (104), which is one of the aircraft central hydraulic power sources (104, 105), and are configured to drive a first control surface (103a, 108a), which is provided as one of the control surfaces (103a, 103b, 108a, 108b), and a plurality of second actuators (11a, 11b) that are configured to operate as a result of the pressure oil being supplied thereto from a second aircraft central hydraulic power source (105), which is one of the aircraft central hydraulic power sources (104, 105) and is different from the first aircraft central hydraulic power source (104), and are configured to drive a second control surface (103b, 108b), which is provided as one of the control surfaces (103a, 103b, 108a, 108b) so as to operate as one of a pair with the first control surface (103a, 108a); and
as the backup hydraulic pumps (18), a first backup hydraulic pump (18) that is configured to be installed inside a wing (102a, 107a) on which the first control surface (103a, 108a) is provided and that is able to supply the pressure oil to the first actuators (11a, 11b) if a loss or degradation of a function of the first aircraft central hydraulic power source (104) has occurred, and a second backup hydraulic pump (18) that is configured to be installed inside a wing (102b, 107b) on which the second control surface (103b, 108b) is provided, and that is able to supply the pressure oil to the second actuators (11a, 11b) if a loss or degradation of a function of the second aircraft central hydraulic power source (105) has occurred, wherein at least one of the control valves (17a) for at least one of the actuators (11a) is provided as a valve mechanism for switching the state of connection of a supply path (104b) in communication with the aircraft central hydraulic power source (104) and a discharge path (106a) in communication with a reservoir circuit (106) to oil chambers (15a, 15b) in a cylinder (15) of the actuator (11a), wherein the discharge path (106a) is provided with a relief valve (23) for discharging the pressure oil to the reservoir circuit (106) if the pressure of the oil discharged from the actuators (11a, 11b) has increased, on the downstream side of a point to which the oil path of the backup hydraulic pump (18) on its suction side is connected, and wherein the relief valve (23) is provided with a pilot pressure chamber that is in communication with the supply path (104b) and in which a spring is disposed, wherein if the pressure of the pressure oil supplied from the supply path (104b) falls below a predetermined pressure value, the pressure of the pressure oil supplied as pilot pressure oil from the supply path (104b) to the aforementioned pilot pressure chamber also falls below a predetermined pressure value, and the discharge path (106a) is blocked by the relief valve (23).

## Patentansprüche

1. Luftfahrzeugstellglied-Hydrauliksystem (1, 1a, 1b, 2, 2a, 2b, 3), das mehrere hydraulisch betätigte Stellglieder (11a, 11b) zum Antreiben einer oder mehrerer Steuerflächen (103a, 103b, 108a, 108b, 110) eines Luftfahrzeugs (100) aufweist und diesen Stellgliedern (11a, 11b) Drucköl zuführt, umfassend:
die mehreren Stellglieder (11a, 11b), die eingerichtet sind, um infolge des Drucköls, das ihnen von einer oder mehreren zentralen Luftfahrzeug-Hydraulikkraftquellen (104, 105), die in einem Flugwerk (101) des Luftfahrzeugs (100) installiert sind, zugeführt wird, betätigt zu werden, und die eingerichtet sind, um eine der Steuerflächen (103a, 103b, 108a, 108b, 110) anzutreiben;
mehrere Steuerventile (17a, 17b), von denen jedes dem jeweiligen Stellglied entspricht, und
eine oder mehrere Sicherungshydraulikpumpen (18), von denen jede eingerichtet ist, um im Inneren eines Flügels (102a, 102b; 107a, 107b, 109) installiert zu sein, auf dem die Steuerfläche (103a, 103b, 108a, 108b, 110) bereitgestellt ist, und imstande ist, den Stellglieden (11a, 11b) das Drucköl zuzuführen, wenn ein Verlust oder eine Verschlechterung einer Funktion der einen oder mehreren zentralen Luftfahrzeug-Hydraulikkraftquellen (104, 105) stattgefunden hat,
wobei das Drucköl eingerichtet ist, um von derselben zentralen Luftfahrzeug-Hydraulikkraftquelle (104, 105) zu den mehreren Stellgliedern (11a, 11b) zugeführt zu werden, die eine der Steuerflächen (103a, 103b; 108a, 108b, 110) antreiben, und
eine der Sicherungshydraulikpumpen (18) den mehreren Stellgliedern (11a, 11b), die eingerichtet sind, um eine der mehreren Steuerflächen (103a, 103b; 108a, 108b, 110) anzutreiben, das Drucköl zuführt, ferner umfassend:
als die mehreren Stellglieder (11a, 11b), mehrere erste Stellglieder (11a, 11b), die eingerichtet sind, um infolge des Drucköls, das ihnen von einer ersten zentralen Luftfahrzeug-Hydraulikkraftquelle (104) zugeführt wird, betätigt zu werden, die eine der zentralen Luftfahrzeug-Hydraulikkraftquellen (104, 105) ist, und eingerichtet sind, um eine erste Steuerfläche (103a, 108a) anzutreiben, die als eine der Steuerflächen (103a, 103b, 108a, 108b) bereitgestellt ist, und mehrere zweite Stellglieder (11a, 11b), die eingerichtet sind, um infolge des Drucköls, das ihnen von einer zweiten zentralen Luftfahrzeug-Hydraulikkraftquelle (105) zugeführt wird, betätigt zu werden, die eine der zentralen Luftfahrzeug-Hydraulikkraftquellen (104, 105) ist und sich von der ersten zentralen Luftfahrzeug-Hydraulikkraftquelle (104) unterscheidet, und eingerichtet sind, um eine zweite Steuerfläche (103b, 108b) anzutreiben, die als eine der Steuerflächen (103a, 103b, 108a, 108b) bereitgestellt ist, um als eine von einem Paar mit der ersten Steuerfläche (103a, 108a) betätigt zu werden; und
als die Sicherungshydraulikpumpen (18), eine erste Sicherungshydraulikpumpe (18), die eingerichtet ist, um im Inneren eines Flügels (102a, 107a) installiert zu sein, auf dem die erste Steuerfläche (103a, 108a) bereitgestellt ist, und die imstande ist den ersten Stellgliedern (11a, 11b) das Drucköl zuzuführen, wenn ein Verlust oder eine Verschlechterung einer Funktion der ersten zentralen Luftfahrzeug-Hydraulikkraftquelle (104) stattgefunden hat, und eine zweite Sicherungshydraulikpumpe (18), die eingerichtet ist, um im Inneren eines Flügels (102b, 107b) installiert zu sein, auf dem die zweite Steuerfläche (103b, 108b) bereitgestellt ist, und die imstande ist, den zweiten Stellgliedern (11a, 11b) das Drucköl zuzuführen, wenn ein Verlust oder eine Verschlechterung einer Funktion der zweiten zentralen Luftfahrzeug-Hydraulikkraftquelle (105) stattgefunden hat, wobei mindestens eines der Steuerventile (17a) für mindestens eines der Stellglieder (11a) als ein Ventilmechanismus zum Umschalten des Verbindungszustands eines Zuführwegs (104b) in Kommunikation mit der zentralen Luftfahrzeug-Hydraulikkraftquelle (104) und eines Ableitungswegs (106a) in Kommunikation mit einem Vorratskreislauf (106) zu Ölkammern (15a, 15b) in einem Zylinder (15) des Stellglieds (11a) bereitgestellt ist, wobei der Ableitungsweg (106a) mit einem Entlastungsventil (23) zum Ableiten des Drucköls zu dem Vorratskreislauf (106), wenn der Druck des Öls, das aus den Stellglieder (11a, 11b) abgeleitet wird, angestiegen ist, auf der stromabwärtigen Seite eines Punktes bereitgestellt ist, mit dem der Ölweg der Sicherungshydraulikpumpe (18) auf ihrer Ansaugseite verbunden ist, und wobei das Entlastungsventil (23) mit einer Vorsteuerdruckkammer bereitgestellt ist, die mit dem Zuführweg (104b) in Kommunikation ist und in der eine Feder angeordnet ist, wobei, wenn der Druck des Drucköls, das von dem Zuführweg (104b) zugeführt wird, unter einen vorbestimmten Druckwert fällt, der Druck des Drucköls, das der zuvor erwähnten Vorsteuerdruckkammer als Vorsteuerdrucköl von dem Zuführweg (104b) zugeführt wird, auch unter einen vorbestimmten Druckwert fällt und der Ableitungsweg (106a) durch das Entlastungsventil (23) gesperrt wird.

## Revendications

1. Système hydraulique d'actionneur d'avion (1, 1a, 1b, 2, 2a, 2b, 3) qui comporte une pluralité d'actionneurs à fonctionnement hydraulique (11a, 11b) pour entraîner une ou plusieurs surfaces de commande (103a, 103b, 108a, 108b, 110) d'un avion (100) et apporte de l'huile sous pression à ces actionneurs (11a, 11b), comprenant :
la pluralité d'actionneurs (11a, 11b) configurés pour fonctionner à la suite d'un apport de l'huile sous pression à ceux-ci depuis une ou plusieurs sources d'énergie hydraulique centrales d'avion (104, 105) installées dans une cellule (101) de l'avion (100), et configurés pour entraîner l'une des surfaces de commande (103a, 103b, 108a, 108b, 110) ;
une pluralité de soupapes de commande (17a, 17b), dont chacune correspond à l'actionneur respectif ; et
une ou plusieurs pompes hydrauliques de secours (18), dont chacune est configurée pour être installée à l'intérieur d'une aile (102a, 102b, 107a, 107b, 109) sur laquelle la surface de commande (103a, 103b, 108a, 108b, 110) est prévue et est capable d'apporter l'huile sous pression aux actionneurs (11a, 11b) si une perte ou dégradation d'une fonction des une ou plusieurs sources d'énergie hydraulique centrales d'avion (104, 105) est survenue,
dans lequel l'huile sous pression est configurée pour être apportée depuis la même source d'énergie hydraulique centrale d'avion (104, 105) à la pluralité d'actionneurs (11a, 11b) qui entraînent l'une des surfaces de commande (103a, 103b, 108a, 108b, 110), et
l'une des pompes hydrauliques de secours (18) apporte l'huile sous pression à la pluralité d'actionneurs (11a, 11b) qui sont configurés pour entraîner l'une des surfaces de commande (103a, 103b, 108a, 108b, 110), comprenant en outre :
en tant que pluralité d'actionneurs (11a, 11b), une pluralité de premiers actionneurs (11a, 11b) qui sont configurés pour fonctionner à la suite d'un apport de l'huile sous pression à ceux-ci depuis une première source d'énergie hydraulique centrale d'avion (104), qui est l'une des sources d'énergie hydraulique centrales d'avion (104, 105), et sont configurés pour entraîner une première surface de commande (103a, 108a), qui est prévue en tant que l'une des surfaces de commande (103a, 103b, 108a, 108b), et une pluralité de seconds actionneurs (11a, 11b) qui sont configurés pour fonctionner à la suite d'un apport de l'huile sous pression à ceux-ci depuis une seconde source d'énergie hydraulique centrale d'avion (105), qui est l'une des sources d'énergie hydraulique centrales d'avion (104, 105) et est différente de la première source d'énergie hydraulique centrale d'avion (104), et sont configurés pour entraîner une seconde surface de commande (103b, 108b), qui est prévue en tant que l'une des surfaces de commande (103a, 103b, 108a, 108b) de manière à fonctionner comme l'une d'une paire avec la première surface de commande (103a, 108a) ; et
en tant que pompes hydrauliques de secours (18), une première pompe hydraulique de secours (18) qui est configurée pour être installée à l'intérieur d'une aile (102a, 107a) sur laquelle est prévue la première surface de commande (103a, 108a) et qui est capable d'apporter l'huile sous pression aux premiers actionneurs (11a, 11b) si une perte ou dégradation d'une fonction de la première source d'énergie hydraulique centrale d'avion (104) est survenue, et une seconde pompe hydraulique de secours (18) qui est configurée pour être installée à l'intérieur d'une aile (102b, 107b) sur laquelle est prévue la seconde surface de commande (103b, 108b), et qui est capable d'apporter l'huile sous pression aux seconds actionneurs (11a, 11b) si une perte ou dégradation d'une fonction de la seconde source d'énergie hydraulique centrale d'avion (105) est survenue,
dans lequel au moins l'une des soupapes de commande (17a) pour au moins un des actionneurs (11a) est prévue en tant que mécanisme de soupape pour commuter l'état de raccordement d'un chemin d'apport (104b) en communication avec la source d'énergie hydraulique centrale d'avion (104) et d'un chemin d'évacuation (106a) en communication avec un circuit de réservoir (106) vers des chambres d'huile (15a, 15b) dans un cylindre (15) de l'actionneur (11a),
dans lequel le chemin d'évacuation (106a) est pourvu d'une soupape de décharge (23) pour évacuer l'huile sous pression vers le circuit de réservoir (106) si la pression de l'huile évacuée des actionneurs (11a, 11b) a augmenté, sur le côté aval d'un point au niveau duquel le chemin d'huile de la pompe hydraulique de secours (18) sur son côté aspiration est raccordé, et dans lequel la soupape de décharge (23) est pourvue d'une chambre de pression pilote qui est en communication avec le chemin d'apport (104b) et dans laquelle est disposé un ressort, dans lequel si la pression de l'huile sous pression apportée depuis le chemin d'apport (104b) tombe sous une valeur de pression prédéterminée, la pression de l'huile sous pression apportée en tant qu'huile sous pression pilote depuis le chemin d'apport (104b) à la chambre de pression pilote précitée tombe également sous une valeur de pression prédéterminée, et le chemin d'évacuation (106a) est bloqué par la soupape de décharge (23).
